# EUROPÄISCHE PATENTANMELDUNG

(11) **EP 4 219 219 A1**
(43) Veröffentlichungstag der Anmeldung: **02.08.2023**
(21) Anmeldenummer: 22153758.2
(22) Anmeldetag: 27.01.2022
(51) Int. Cl.: B60L 9/30, B60L 50/53, B60L 50/60, B60L 50/64, B60L 58/12, B60L 9/08, B60L 9/24

(54) **SCHIENENFAHRZEUG UMFASSEND EINEN ENERGIESPEICHERSTRANG MIT EINER ENERGIESPEICHERVORRICHTUNG UND EINEM TRANSFORMATOR, VERFAHREN ZUM BETRIEB EINES SOLCHEN SCHIENENFAHRZEUGS SOWIE VERFAHREN ZUM ZUSAMMENSTELLEN EINER ZUGKOMPOSITION UMFASSEND EINEN SCHIENENFAHRZEUGWAGEN**

(71) Anmelder: Stadler Rail AG, 9565 Bussnang (CH)
(72) Erfinder: Tscheng, Jorgen, 8046 Zürich (CH); Kägi, Thomas, 9443 Widnau (CH)
(74) Vertreter: Hepp Wenger Ryffel AG

(57) **Zusammenfassung**

Die vorliegende Erfindung betriff ein Schienenfahrzeug (22) umfassend einen Energiespeicher sowie einen Transformator (18), der dem Energiespeicher zugeordnet ist; ein Schienenfahrzeugwagen (24) mit einem Energiespeicher und einem Transformator (18), der dem Energiespeicher zugeordnet ist; ein Verfahren zum Betrieb eines Schienenfahrzeugs mit einem Energiespeicherstrang (15) sowie ein Verfahren zur Zusammenstellung einer Zugkomposition.

Das Schienenfahrzeug (22) umfasst einen Schienenfahrzeugwagen (24), eine Traktionsausrüstung (6), einen Hochspannungsleiter (5), einen Stromabnehmer (1) sowie einen Energiespeicherstrang (15) mit einem Energiespeicher. Die Traktionsausrüstung (6) umfasst mindestens einen Traktionsstromrichter (9) sowie mindestens einen Fahrmotor (11). Der Hochspannungsleiter (5) verbindet die Traktionsausrüstung (6) mit dem Stromabnehmer (1) elektrisch. Der Energiespeicher kann eine Batterie (20) sein.

## Beschreibung

Die vorliegende Erfindung betrifft ein Schienenfahrzeug umfassend einen Energiespeicher sowie einen Transformator, der dem Energiespeicher zugeordnet ist; ein Schienenfahrzeugwagen mit einem Energiespeicher und einem Transformator, der dem Energiespeicher zugeordnet ist; ein Verfahren zum Betrieb eines Schienenfahrzeugs mit einem Energiespeicherstrang sowie ein Verfahren zur Zusammenstellung einer Zugkomposition.

Ein- oder zweistöckige Schienenfahrzeuge die sowohl mittels externer Energiequellen wie Oberleitungen, als auch mit eingebetteten Energiequellen wie Batterien, Brennstoffzellen oder Verbrennungsmotoren betrieben werden, sind bekannt. Das Dokument EP 3 878 680 offenbart, dass die eingebettete Energiequelle direkt mit dem Traktionszwischenstromkreis verbunden ist. Gleichspannung wird somit von der Batterie direkt in den Zwischenstromkreis gespeist. Ausserdem kann die Batterie mittels des Zwischenstromkreises geladen werden.

Wenn die eingebettete Energiequelle, beispielsweise die Batterie oder die Brennstoffzelle, räumlich weit von dem Stromverbraucher bzw. von den Traktionsumrichtern entfernt angeordnet ist, werden auf Grund der geringen Batterie- bzw. Zwischenkreisspannung stark ausgebildete, aufwendig zu verlegende Stromleitungen notwendig. Dies ist insbesondere aus Gewichtsgründen unvorteilhaft. Verstärkt wird das Problem, wenn die eingebettete Energiequelle auf einem anderen Wagen als der Traktionsumrichter bzw. der Stromverbraucher angeordnet ist und somit Wagenübergänge überbrückt werden müssen. Insbesondere an den Wagenübergängen ist die Verlegung der stark ausgebildeten, schweren Stromleitungen wegen der beweglichen Konstruktion der Wagenübergänge deshalb eine Herausforderung.

Es ist die Aufgabe der Erfindung, die Nachteile des Stands der Technik zu überwinden und insbesondere ein Schienenfahrzeug zu schaffen, bei dem eine eingebettete Energiequelle einen Stromverbraucher mit möglichst wenig stark ausgebildeten Stromleitungen versorgen kann.

Die Aufgabe wird durch ein Schienenfahrzeug umfassend ein Schienenfahrzeugwagen, eine Traktionsausrüstung, einen Hochspannungsleiter, einen Energiespeicherstrang mit einem Energiespeicher und einem dem Energiespeicher zugeordneten Transformator sowie ein Schienenfahrzeugwagen umfassend ein Hochspannungsleiter, ein Energiespeicherstrang mit einem Energiespeicher und einem Transformator, der dem Energiespeicher zugeordnet ist, einem Verfahren zum Betrieb eines Schienenfahrzeugs sowie einem Verfahren zur Zusammenstellung einer Zugkomposition gelöst.

Insbesondere wird die Aufgabe durch ein Schienenfahrzeug umfassend einen Schienenfahrzeugwagen, eine Traktionsausrüstung, einen Hochspannungsleiter, einen Stromabnehmer sowie einen Energiespeicherstrang mit einem Energiespeicher gelöst. Die Traktionsausrüstung umfasst mindestens einen Traktionsstromrichter sowie mindestens einen Fahrmotor. Der Hochspannungsleiter verbindet die Traktionsausrüstung mit dem Stromabnehmer elektrisch. Der Energiespeicher kann eine Batterie sein. Der Energiespeicherstrang weist einen Transformator auf, der dem Energiespeicher zugeordnet ist und mit dem Energiespeicher und mit dem Hochspannungsleiter elektrisch verbunden ist.

Durch ein solches Schienenfahrzeug kann die Hochspannungsleitung besonders vorteilhaft dimensioniert werden. Ausserdem kann die Batterie geladen werden, ohne dass die Traktionsausrüstung mit Strom beaufschlagt wird. Die Traktionsausrüstung, der Hochspannungsleiter sowie der Energiespeicherstrang können auf einem Schienenfahrzeugwagen angeordnet sein. Die Traktionsausrüstung, sowie der Energiespeicherstrang können auch auf separaten Schienenfahrzeugwagen angeordnet und mit dem Hochspannungsleiter verbunden sein.

Es ist möglich, dass sich die Traktionsausrüstung auf einem Schienenfahrzeugwagen befindet, der Hochspannungsleiter an der Traktionsausrüstung angeschlossen ist und zu einem anderen Schienenfahrzeugwagen führt, wobei auf dem anderen Schienenfahrzeugwagen der Energiespeicherstrang angeordnet ist. Es ist auch möglich, dass sich die Traktionsausrüstung im Triebkopf eines Schienenfahrzeugs befindet oder dass sich der Energiespeicherstrang im Triebkopf eines Schienenfahrzeugs befindet. Es ist ferner möglich, dass sich sowohl die Traktionsausrüstung als auch der Energiespeicherstrang im Triebkopf eines Schienenfahrzeugs befinden.

Ein Schienenfahrzeugwagen kann im Wesentlichen nur für den Energiespeicherstrang vorgesehen sein, wobei sich die Traktionsausrüstung nicht auf diesem Wagen befindet. In diesem Fall hat dieser Schienenfahrzeugwagen im Wesentlichen die Aufgabe der Energiebereitstellung und es befinden sich in diesem Schienenfahrzeugwagen keine Sitzgelegenheiten für Passagiere. Der Schienenfahrzeugwagen bleibt allerdings bevorzugt für Passagiere im Innenraum des Schienenfahrzeugwagens passierbar.

Die Traktionsausrüstung kann einen oder mehrere Fahrmotoren umfassen. Es ist auch möglich, dass die Traktionsausrüstung eine Vielzahl von Fahrmotoren umfasst, welche jeweils an einem Drehgestell, einer Antriebsachse oder einem Rad angeordnet sind.

Der Energiespeicherstrang kann eine Batterie umfassen. Der Energiespeicherstrang kann auch eine Brennstoffzelle oder einen Hilfsverbrennungsmotor umfassen. So ist es möglich, dass durch eine Brennstoffzelle elektrische Energie bereitgestellt wird, welche dem Betrieb des Schienenfahrzeugs dient. Es ist auch möglich, dass durch einen Dieselmotor Diesel in Bewegungsenergie umgewandelt wird und die Bewegungsenergie durch Induktion in elektrische Energie umgewandelt wird, wobei die elektrische Energie dem Betrieb des Schienenfahrzeugs dient. Entscheidend ist, dass mittels des Energiespeicherstrangs Energie gespeichert und als elektrische Energie zur Verfügung gestellt werden kann.

Bei dem Schienenfahrzeug kann der Hochspannungsleiter wahlweise über den Stromabnehmer durch eine externe Stromversorgung und/oder mittels des Energiespeicherstrangs mit Hochspannungswechselstrom beaufschlagbar sein.

Dies hat den Vorteil, dass das Schienenfahrzeug sowohl mittels einer externen Stromversorgung als auch mittels einer eingebetteten Energiequelle sicher und zuverlässig betrieben werden kann.

Das Schienenfahrzeug kann so ausgebildet sein, dass der Hochspannungsleiter ohne spannungsbeeinflussende Bauteile dergestalt über den Stromabnehmer mit einer externen Stromversorgung verbunden ist, dass der Hochspannungsleiter und die Traktionsausrüstung im Wesentlichen mit der Spannung sowie der Frequenz des Stroms der externen Stromversorgung beaufschlagbar ist.

In diesem Fall befinden sich keine schweren und sperrigen spannungsbeeinflussenden Bauteile zwischen der externen Stromversorgung und der Traktionsausrüstung. Das der Hochspannungsleiter ohne spannungsbeeinflussende Bauteile über den Stromabnehmer mit einer externen Stromversorgung verbunden ist, bedeutet, dass sich zwischen dem Hochspannungsleiter und der externen Stromversorgung kein Transformator befindet. Es ist selbstverständlich möglich, dass sich elektrische Filter oder andere elektrische Bauteile zwischen dem Hochspannungsleiter und der externen Stromversorgung befinden, welche jedoch die Spannung nicht im Wesentlichen beeinflussen.

Der Hochspannungsleiter und die Traktionsausrüstung des Schienenfahrzeugs können so ausgebildet sein, dass sie mit einer Wechselspannung von im Wesentlichen 25 kV bei einer Frequenz von im Wesentlichen 60 Hz oder 50 Hz, bevorzugt 15 kV bei einer Frequenz von im Wesentlichen 16,66 Hz beaufschlagbar sind.

Dadurch können der Hochspannungsleiter und die Traktionsausrüstung mit Spannungen und Frequenzen beaufschlagt werden, welche üblicherweise in der Eisenbahntechnik verwendet werden.

Der Energiespeicherstrang des Schienenfahrzeugs kann einen elektrischen Frequenzfilter aufweisen. Der Frequenzfilter kann auf der Primärseite des Batterietransformators angeordnet sein. Der elektrische Frequenzfilter kann auch auf der Sekundärseite oder auf einer separaten Wicklung des Batterietransformators angeordnet sein.

Um Kompatibilitätsprobleme mit Gleichstromkreisen z.B. der Zugsicherung oder EMV-Probleme auf nicht-elektrifizierten Strecken zu vermeiden kann es der Batterietransformator aber auch erlauben ein anderes Spannungsniveau bzw. eine andere Frequenz für die von den Batterien bereitgestellte Traktionsspannung zu wählen.

Ebenfalls kann für Betrieb auf nicht elektrifizierten Strecken ein gesonderter Rückstrompfad von den Minuspotentialen der Traktions- und Batterietransformatoren innerhalb des Fahrzeugs vorgesehen sein, um die Vorgaben für Störströme dort zu erfüllen. Der gesonderte Rückstrompfad ist bevorzugt selektiv schaltbar, d.h. der gesonderte Rückstrompfad kann zugeschaltet werden. Wenn der gesonderte Rückstrompfad nicht zugeschaltet ist, fliesst der Rückstrom über die Schienen.

Das Schienenfahrzeug kann mindestens einen Doppelstockwagen aufweisen.

Ein solches Schienenfahrzeug mit einem Doppelstockwagen kann besonders viele Fahrgäste aufnehmen und komfortabel transportieren.

Das Schienenfahrzeug kann eine Vielzahl von Schienenfahrzeugwagen umfassen. Die mindestens eine Batterie kann in genau einem Batteriewagen angeordnet sein. Die mindestens eine Batterie kann auch in mehreren der Schienenfahrzeugwagen angeordnet sein.

Durch die Anordnung der Batterie in einem oder mehreren Schienenfahrzeugwagen kann eine Zugkomposition vorteilhaft angeordnet werden.

Die mindestens eine Batterie kann in genau einem Batteriewagen angeordnet sein. Ein solcher Schienenfahrzeugwagen dient im Wesentlichen der Anordnungen der Batterie und ist somit ein Batteriewagen. Der Batteriewagen ist für Zugpassagiere im Inneren des Batteriewagens passierbar, so dass Zugpassagiere von einem vor dem Batteriewagen angeordneten Schienenfahrzeugwagen in einen hinter dem Batteriewagen angeordneten Schienenfahrzeugwagen gelangen können. Der Batteriewagen weist keine Sitzplätze für Zugpassagiere auf.

Die mindestens eine Batterie kann auch in mehreren der Schienenfahrzeugwagen angeordnet sein, welche neben der Batterie auch für den Aufenthalt von Passagieren vorgesehen sind.

In diesem Fall sind in dem Schienenfahrzeugwagen mit der Batterie auch Sitzgelegenheiten für Passagiere angeordnet. Auch ein solcher Schienenfahrzeugwagen mit einer Batterie kann für Passagiere im Innenraum passierbar sein. Es ist auch möglich, dass die Batterien in einem Triebkopf angeordnet sind.

Der Schienenfahrzeugwagen, welcher die Batterie aufweist, kann eine untere Ebene und eine obere Ebene umfassen. Die Batterie kann dabei auf der unteren Ebene angeordnet sein. Die obere Ebene kann einen Aufenthaltsbereich für Passagiere aufweisen.

Durch die vorteilhafte Anordnung der Batterie auf der unteren Ebene des Doppelstockwagens ergibt sich eine günstige Gewichtsverteilung und beim Fahren eine vorteilhafte Fahrdynamik.

Das Schienenfahrzeug kann eine Anzeigeeinrichtung aufweisen, durch welche der Ladestand der Batterien anzeigbar ist.

Durch eine solche Anzeigeeinrichtung, welche den Ladestand der Batterien anzeigt, kann das Schienenfahrzeug vorteilhaft betrieben werden.

Die Anzeigeeinrichtung kann den Ladestand einer Batterie anzeigen. Die Anzeigeeinrichtung kann auch den Ladestand mehrerer Batterien anzeigen.

Die Anzeigeeinrichtung des Schienenfahrzeugs kann die Restladedauer bis zur vollständigen Ladung der Batterie anzeigen.

Durch die Anzeige der Restladedauer bis zur vollständigen Ladung der Batterie kann der Betrieb des Schienenfahrzeugs und die Ladung der Batterie vorteilhaft geplant und ausgeführt werden.

Es ist möglich, dass die Anzeigeeinrichtung die aktuelle Restladedauer bis zur vollständigen Ladung der Batterie anzeigt ohne dass der weitere Betrieb und Stromverbrauch des Schienenfahrzeugs berücksichtigt wird. Es ist auch möglich, dass die Anzeigeeinrichtung eine Restladedauer bis zur vollständigen Ladung der Batterie anzeigt, wobei der weitere voraussichtliche Betrieb und Stromverbrauch des Schienenfahrzeugs bei der Berechnung und Anzeige der Restladedauer berücksichtig wird.

Das Schienenfahrzeug kann so ausgebildet sein, dass Stromverbraucher des Schienenfahrzeugs, welche nicht der Traktion dienen, zumindest teilweise elektrisch an den Batteriestromrichter anschliessbar oder angeschlossen sind.

Dadurch können Stromverbraucher des Schienenfahrzeugs, welche nicht der Traktion dienen, vorteilhaft durch die Batterie betrieben werden, auch wenn das Schienenfahrzeug nicht an eine externe Energiequelle, beispielsweise eine Oberleitung, angeschlossen ist.

Die Aufgabe der Erfindung wird weiterhin gelöst durch einen Schienenfahrzeugwagen für ein Schienenfahrzeug wie vorhergehend beschrieben umfassend einen Hochspannungsleiter, der mit einer Traktionsausrüstung und mit einem Stromabnehmer elektrisch verbindbar ist. Die Traktionsausrüstung umfasst mindestens einen Traktionsstromrichter sowie mindestens einen Fahrmotor. Der Schienenfahrzeugwagen umfasst ferner einen Energiespeicherstrang mit einem Energiespeicher. Der Energiespeicher kann eine Batterie sein. Der Energiespeicherstrang weist einen Transformator auf. Der Transformator ist dem Energiespeicher zugeordnet und mit dem Energiespeicher und mit dem Hochspannungsleiter elektrisch verbunden.

Ein solcher Schienenfahrzeugwagen ist besonders gut in schon bestehende Zugkompositionen integrierbar und kann in die Zugkomposition eines gewöhnlichen Zuges eingebracht werden. An den anderen Komponenten der Zugkomposition sind dabei nur geringfügige Umbauten notwendig. Dadurch können die Zugkompositionen vorteilhaft betrieben werden. Der Energiespeicherstrang kann eine Batterie aufweisen. Der Energiespeicherstrang kann auch einen Verbrennungsmotor oder eine Brennstoffzelle aufweisen, durch welche fossile Energie in elektrische Energie umgewandelt wird. Entscheidend ist, dass durch den Energiespeicherstrang elektrische Energie bereitgestellt wird.

Die Aufgabe der Erfindung wird auch durch ein Verfahren zum Betrieb eines Schienenfahrzeugs wie oben beschrieben gelöst. Bei dem Verfahren wird der Fahrmotor des Schienenfahrzeugs zumindest zeitweise und/oder teilweise aus dem Energiespeicherstrang mit dem elektrischen Strom gespeist.

Der Fahrmotor kann durch eine Batterie aus dem Energiespeicherstrang gespeist werden. Es ist möglich, dass der Fahrmotor während des Verfahrens nur aus dem Energiespeicherstrang mit Energie gespeist wird. Es ist auch möglich, dass der Fahrmotor zur selben Zeit teilweise jeweils von dem Energiespeicherstrang und einer externen Stromversorgung mit dem elektrischen Strom gespeist wird.

Die Aufgabe der Erfindung wird weiterhin gelöst durch ein Verfahren zur Zusammenstellung einer Zugkomposition, wobei einer bestehenden Zugkomposition ein Schienenfahrzeugwagen wie oben beschrieben hinzugefügt wird.

Die Erfindung wird in den folgenden Figuren näher erläutert. Hierbei zeigt:
- Figur 1:: Ein Schienenfahrzeug mit einem Batteriewagen mit dem dazugehörigen schematischen Schaltplan,
- Figur 2:: schematischer Schaltplan des Schienenfahrzeugs gemäss Fig. 1, welches durch eine externe Stromversorgung angetrieben ist,
- Figur 3:: schematischer Schaltplan des Schienenfahrzeugs gemäss Fig. 1, welches durch eine Batterie angetrieben wird,
- Figur 4:: eine mögliche Fahrzeugkonfiguration eines Schienenfahrzeugs mit einem Batteriewagen,
- Figur 5:: eine alternative Fahrzeugkonfiguration eines Schienenfahrzeugs mit zwei Schienenfahrzeugwagen mit Batterien,
- Figur 6:: eine alternative Konfiguration eines Schienenfahrzeugs mit zwei Triebköpfen mit Batterien.

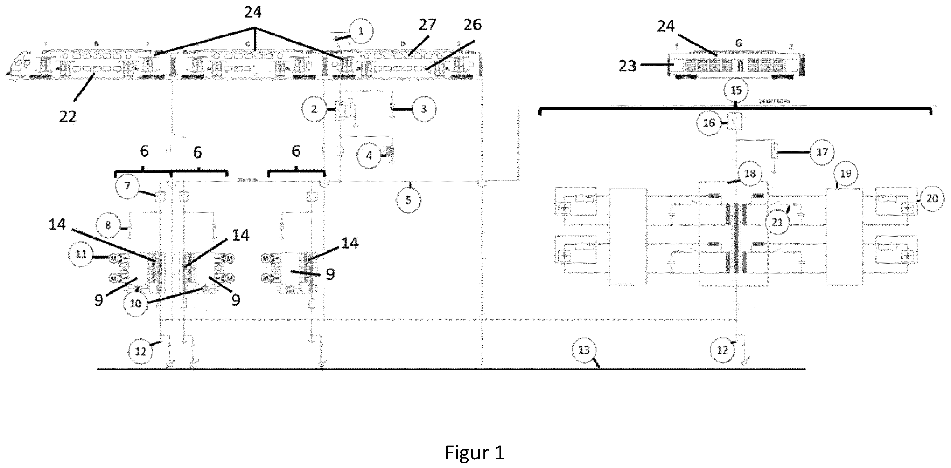

Figur 1 zeigt ein Schienenfahrzeug 22 mit einem Batteriewagen 23 und dem dazugehörigen Schaltplan. Das Schienenfahrzeug 22 weist mehrere Schienenfahrzeugwagen 24 auf. Die Schienenfahrzeugwagen 24 weisen teilweise eine untere Ebene 26 und eine obere Ebene 27 auf. Das Schienenfahrzeug 22 weist einen Stromabnehmer 1 auf. Der Stromabnehmer 1 ist mit einem Hochspannungsleiter 5 des Schienenfahrzeugs 22 verbunden. Zwischen dem Stromabnehmer 1 und dem Hochspannungsleiter 5 ist ein Hauptschalter 2 angeordnet. Ferner sind zwischen dem Stromabnehmer 1 und dem Hochspannungsleiter 5 ein Überspannungsableiter 3 sowie mehrere Strom- und Spannungssensoren 4 angeordnet.

Das Schienenfahrzeug 22 weist ausserdem mehrere Traktionsausrüstungen 6 auf.

Die Traktionsausrüstungen 6 umfassen jeweils einen ersten Systemtrenner 7, einen ersten Überspannungsableiter 8, einen Fahrmotor 11, einen Traktionstransformator 14, einen Hilfsbetriebsumrichter 10 sowie Betriebserdbürsten 12 und einen Traktionsstromrichter 9.

An dem Hochspannungsleiter 5 ist ein Energiespeicherstrang 15 angebunden. Der Energiespeicherstrang 15 umfasst einen zweiten Systemtrenner 16, einen zweiten Überspannungsableiter 17, einen Batterietransformator 18, einen Batteriestromrichter 19, einen Filter 21, eine Batterie 20 sowie zweite Betriebserdbürsten 12.

Unter dem Schienenfahrzeug 22 sind die Schienen 13 angeordnet. Der Energiespeicherstrang 15 ist über den zweiten Systemtrenner 16 trennbar mit den Traktionsausrüstungen 6 sowie dem Stromabnehmer 1 verbunden.

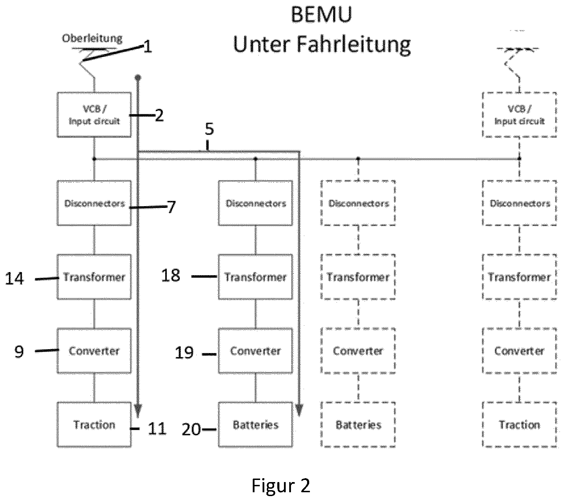

Figur 2 zeigt den schematischen Schaltplan des Schienenfahrzeugs aus Figur 1 (nicht dargestellt), in einem Betriebsmodus, in dem es mittels einer externen Stromversorgung betrieben wird. Gleiche Bezugszeichen bezeichnen die gleichen Komponenten.

Elektrische Energie fliesst bei dem dargestellten Antrieb von einer externen Stromversorgung über den Stromabnehmer 1 durch den Hauptschalter 2, den ersten Systemtrenner 7, den Traktionstransformator 14 sowie den Traktionsstromrichter 9zum Fahrmotor 11. Ausserdem fliesst elektrische Energie von dem Stromabnehmer 1 durch den Hochspannungsleiter 5 und den Batterietransformator 18 zu der Batterie 20.

Gestrichelt sind ein möglicher zweiter Energiespeicherstrang und eine mögliche weitere Traktionsausrüstung dargestellt.

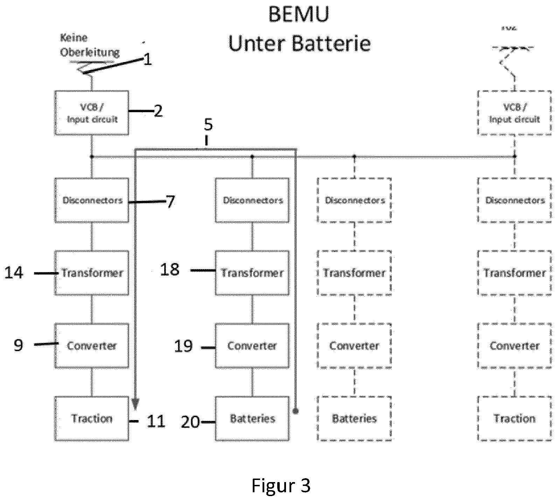

Figur 3 zeigt den schematischen Schaltplan des Schienenfahrzeugs 22 gemäss Figur 1 in einem Betriebsmodus, in dem es durch eine Batterie 20 angetrieben wird. Der Stromabnehmer 1 ist nicht mit einer Oberleitung verbunden. In diesem Betriebsmodus des Schienenfahrzeugs 22 fliesst die elektrische Energie von der Batterie 20 durch den Batteriestromrichter 19, den Batterietransformator 18, den Hochspannungsleiter 5, den ersten Systemtrenner 7, den Traktionstranformator 14 und den Traktionsstromrichter 9 zu dem Fahrmotor 11.

Gestrichelt sind ein möglicher zweiter Energiespeicherstrang und eine mögliche weitere Traktionsausrüstung dargestellt.

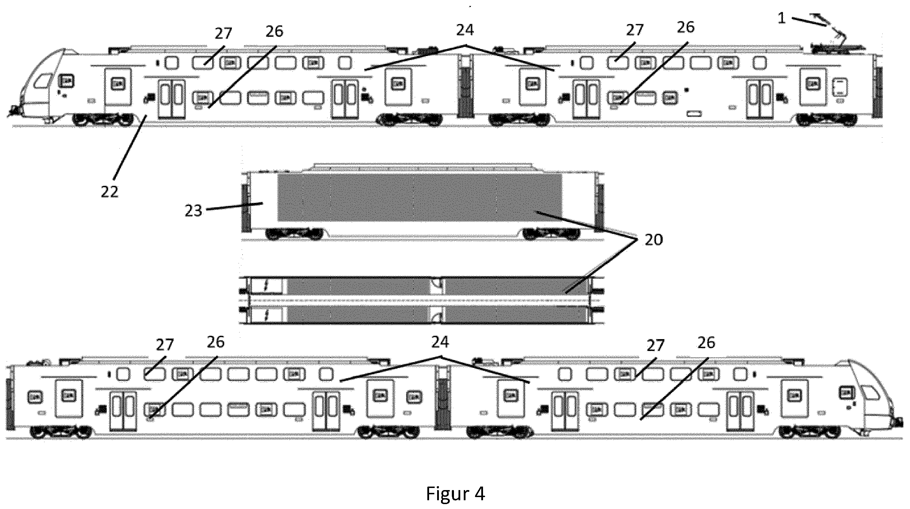

Figur 4 zeigt eine mögliche Fahrzeugkonfiguration eines Schienenfahrzeugs 22. Das Schienenfahrzeug 22 weist mehrere Schienenfahrzeugwagen 24 auf. Einer der Schienenfahrzeugwagen 24 ist als Batteriewagen 23 ausgebildet. Die Schienenfahrzeugwagen weisen teilweise eine untere Ebene 26 und eine obere Ebene 27 auf. Das Schienenfahrzeug 22 weist einen Stromabnehmer 1 auf. Der Batteriewagen 23 weist eine Batterie 20 auf.

Das Schienenfahrzeug 22 weist drei Wagen und zwei Triebköpfe auf. Der Batteriewagen 23 ist in der Mitte der Komposition des Schienenfahrzeugs 22 angeordnet. Somit befindet sich auf jeder Seite des Batteriewagens 23 jeweils ein weiterer Wagen und ein Triebkopf. Bei dieser Zugkomposition befindet sich die Batterie 20 in einem einzigen Batteriewagen 23. Der Batteriewagen 23 mit der Batterie 20 umfasst keine Sitzgelegenheiten für Fahrgäste. Der Batteriewagen 23 mit der Batterie 20 weist einen Durchgangsbereich auf, so dass Fahrgäste während des Betriebs der Zugkomposition den Batteriewagen 23 mit den Batterien 20 passieren können und so von einem Wagen vor dem Batteriewagen 23 durch den Batteriewagen 23 in einen Wagen hinter dem Batteriewagen 23 gelangen können.

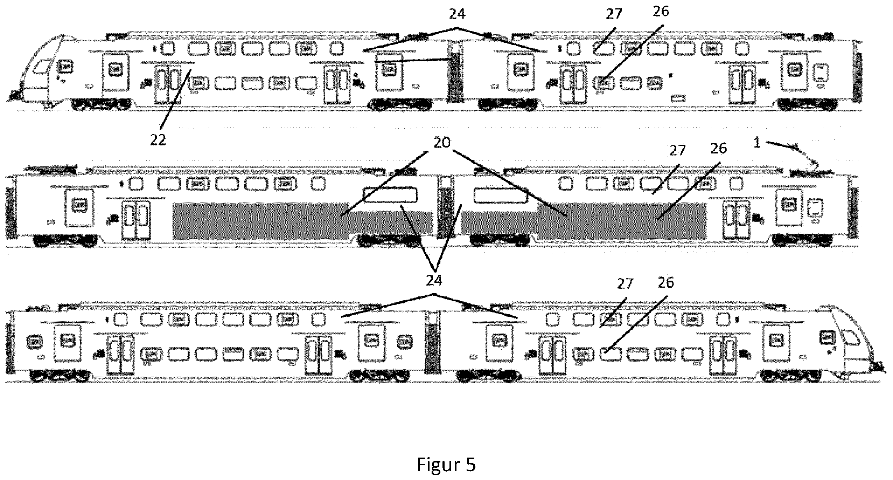

Figur 5 zeigt eine mögliche Zugkomposition eines Schienenfahrzeugs 22 mit sechs Schienenfahrzeugwagen 24. Zwei der Schienenfahrzeugwagen 24 sind mit Batterien 20 ausgestattet. Die Schienenfahrzeugwagen 24 weisen eine untere Ebene 26 und eine obere Ebene 27 auf. Ferner weist das Schienenfahrzeug 22 einen Stromabnehmer 1 auf. Die zwei mit Batterien 20 ausgestatteten Schienenfahrzeugwagen 24 befinden sich in der Mitte der Zugkomposition. Die zwei Schienenfahrzeugwagen 24, die mit Batterien 20 ausgestattet sind, befinden sich nebeneinander. Somit befinden sich vor und nach den beiden mit Batterien 20 ausgestatteten Schienenfahrzeugwagen 24 jeweils ein weiterer Wagen sowie ein Triebkopf. In dieser Zugkomposition sind die Batterien 20 somit auf zwei Schienenfahrzeugwagen 24 aufgeteilt. Die Schienenfahrzeugwagen 24 mit den Batterien 20 weisen jeweils einen Bereich auf, in dem die Batterien 20 angeordnet sind. Die Schienenfahrzeugwagen 24 mit den Batterien 20 weisen auch einen Fahrgastbereich auf, in dem sich Fahrgäste aufhalten können. Ferner weisen die Schienenfahrzeugwagen 24 mit den Batterien 20 eine Zustiegsanordnung für Fahrgäste auf.

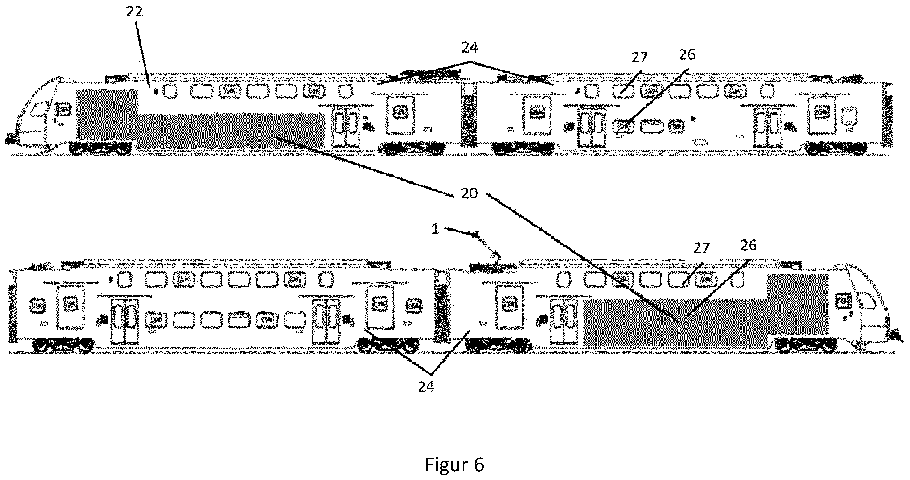

Figur 6 zeigt eine mögliche Konfiguration eines Schienenfahrzeugs 22. Das Schienenfahrzeug 22 weist mehrere Schienenfahrzeugwagen 24 auf. Die Schienenfahrzeugwagen 24 weisen eine untere Ebene 26 und eine obere Ebene 27 auf. Das Schienenfahrzeug 22 weist ausserdem ein Stromabnehmer 1 auf. Die Triebköpfe des Schienenfahrzeugs 22 sind mit Batterien 20 ausgestattet. Die Batterien 20 sind somit in den Triebköpfen angeordnet. In dieser Zugkomposition des Schienenfahrzeugs 22 befinden sich die Batterien 20 jeweils in den Triebköpfen, welche jeweils am Ende des Zuges angeordnet sind. Zwischen den zwei Triebköpfen befinden sich zwei Schienenfahrzeugwagen 24. Die Schienenfahrzeugwagen/ Triebköpfe 23 mit den Batterien 20 weisen jeweils einen Bereich auf, in dem die Batterien 20 angeordnet sind. Die Schienenfahrzeugwagen/ Triebköpfe 24 weisen auch einen Fahrgastbereich auf, in dem sich Fahrgäste aufhalten können. Ferner weisen alle Schienenfahrzeugwagen eine Zustiegsanordnung für Fahrgäste auf.

## Patentansprüche

1. Schienenfahrzeug (22) umfassend:
- einen Schienenfahrzeugwagen (23; 24),
- eine Traktionsausrüstung (6) umfassend mindestens einen Traktionsstromrichter (9) sowie mindestens einen Fahrmotor (11),
- einen Hochspannungsleiter (5) sowie einen Stromabnehmer (1), wobei der Hochspannungsleiter (5) die Traktionsausrüstung (6) mit dem Stromabnehmer (1) elektrisch verbindet,
- einen Energiespeicherstrang (15) mit einem Energiespeicher, insbesondere einer Batterie (20)
**dadurch gekennzeichnet, dass** Energiespeicherstrang (15) einen Transformator (18) aufweist, der dem Energiespeicher zugeordnet ist und mit dem Energiespeicher und mit dem Hochspannungsleiter (5) elektrisch verbunden ist.

2. Schienenfahrzeug (22) nach Anspruch 1, **dadurch gekennzeichnet, dass** der Hochspannungsleiter (5) wahlweise über den Stromabnehmer durch eine externe Stromversorgung und/ oder mittels des Energiespeicherstrangs (15) mit Hochspannungs-Wechselstrom beaufschlagbar ist.

3. Schienenfahrzeug (22) nach Anspruch 2, **dadurch gekennzeichnet, dass** der Hochspannungsleiter (5) ohne spannungsbeeinflussende Bauteile dergestalt über den Stromabnehmer (1) mit einer externen Stromversorgung verbindbar ist, dass der Hochspannungsleiter und die Traktionsausrüstung (6) im Wesentlichen mit der Spannung sowie der Frequenz des Stroms der externen Stromversorgung beaufschlagbar ist.

4. Schienenfahrzeug (22) nach einem der Ansprüche 2 oder 3, **dadurch gekennzeichnet, dass** der Hochspannungsleiter und die Traktionsausrüstung (6) so ausgebildet sind, dass sie mit einer Wechselspannung von im Wesentlichen 25 kV bei einer Frequenz von im Wesentlichen 60 Hz oder 50 Hz, bevorzugt 15 kV bei einer Frequenz von im Wesentlichen 16,66 Hz beaufschlagbar ist.

5. Schienenfahrzeug (22) nach einem der vorhergehenden Ansprüche, **dadurch gekennzeichnet, dass** der Energiespeicherstrang (15) einen elektrischen Frequenzfilter (21) aufweist, welcher bevorzugt auf der Primärseite oder der Sekundärseite oder auf einer separaten Wicklung des Batterietransformators (18) angeordnet ist.

6. Schienenfahrzeug (22) nach einem der vorhergehenden Ansprüche, **dadurch gekennzeichnet, dass** das Schienenfahrzeug (22) mindestens einen Doppelstockwagen aufweist.

7. Schienenfahrzeug (22) nach einem der vorhergehenden Ansprüche, **dadurch gekennzeichnet, dass** das Schienenfahrzeug (22) eine Vielzahl von Schienenfahrzeugwagen (24) umfasst, wobei die mindestens eine Batterie in genau einem Batteriewagen oder in mehreren der Schienenfahrzeugwagen (24) angeordnet ist.

8. Schienenfahrzeug (22) nach Anspruch 7, **dadurch gekennzeichnet, dass** der Schienenfahrzeugwagen (24), welcher die Batterie (20) umfasst, für Passagiere in dem Innenraum des Schienenfahrzeugwagens (24) passierbar ist.

9. Schienenfahrzeug (22) nach einem der Ansprüche 7 - 8, **dadurch gekennzeichnet, dass** der Schienenfahrzeugwagen (24), welcher die Batterie aufweist, eine untere Ebene (26) und eine obere Ebene (27) umfasst, wobei die Batterie (20) bevorzugt auf der unteren Ebene (26) angeordnet ist und insbesondere die obere Ebene (27) einen Aufenthaltsbereich für Passagiere aufweist.

10. Schienenfahrzeug (22) nach einem der vorhergehenden Ansprüche, **dadurch gekennzeichnet, dass** das Schienenfahrzeug eine Anzeigeeinrichtung aufweist, durch welche der Ladestand der Batterien anzeigbar ist.

11. Schienenfahrzeug (22) nach Anspruch 10, **dadurch gekennzeichnet, dass** durch die Anzeigeeinrichtung eine Restladedauer bis zur vollständigen Ladung der Batterie (20) anzeigbar ist.

12. Schienenfahrzeug (22) nach einem der vorhergehenden Ansprüche, **dadurch gekennzeichnet, dass** Stromverbraucher des Schienenfahrzeugs (22), welche nicht der Traktion dienen, zumindest teilweise elektrisch an einen Batteriestromrichter (19) anschliessbar oder angeschlossen sind.

13. Schienenfahrzeugwagen (23) für ein Schienenfahrzeug (22) nach einem der vorangehenden Ansprüche, umfassend:
- einen Hochspannungsleiter (5), der mit einer Traktionsausrüstung (6) umfassend mindestens einen Traktionsstromrichter (9) sowie mindestens einen Fahrmotor (11) und mit einem Stromabnehmer (1) elektrisch verbindbar ist,
- einen Energiespeicherstrang (15) mit einem Energiespeicher, insbesondere einer Batterie (20),
**dadurch gekennzeichnet, dass** Energiespeicherstrang (15) einen Transformator (18) aufweist, der dem Energiespeicher zugeordnet ist und mit dem Energiespeicher und mit dem Hochspannungsleiter (5) elektrisch verbunden ist.

14. Verfahren zum Betrieb eines Schienenfahrzeugs (22) nach einem der Patentansprüche 1 - 12, **dadurch gekennzeichnet, dass** der Fahrmotor (11) zumindest zeitweise und/ oder teilweise aus dem Energiespeicherstrang (15), insbesondere aus der Batterie (20), mit dem elektrischen Strom gespeist wird.

15. Verfahren zur Zusammenstellung einer Zugkomposition, wobei einer bestehenden Zugkomposition ein Schienenfahrzeugwagen nach Anspruch 13 hinzugefügt wird.
